# EUROPEAN PATENT APPLICATION

(11) **EP 1 715 721 A1**
(43) Date of publication of application: **25.10.2006**
(21) Application number: 05710174.3
(22) Date of filing: 14.02.2005
(51) Int. Cl.: H04R 19/04, G01L 9/00

(54) **CAPACITY DETECTION TYPE SENSOR ELEMENT**

(30) Priority: 13.02.2004 JP 2004037339
(71) Applicant: TOKYO ELECTRON LIMITED, Minato-ku, Tokyo 107-8481 (JP); HOSIDEN CORPORATION, Yao-shi, Osaka 581-0071 (JP)
(72) Inventor: KAGAWA, Kenichi, TOKYO ELECTRON AT LIMITED, Amagasaki City, Hyogo 6600891 (JP); YAKABE, Masami, TOKYO ELECTRON AT LIMITED, Amagasaki City, Hyogo 6600891 (JP); SAEKI, Shinichi, Kashiwara-shi, Osaka 5820018 (JP); OHTSUJI, Takahisa, Yao-shi, Osaka 5810004 (JP)
(74) Representative: Liesegang, Eva
(86) International application number: PCT/JP2005/002172
(87) International publication number: WO 2005/079112

(57) **Abstract**

A capacity detection type sensor element includes a rectangular vibrating plate, a flat back electrode which are provided opposedly with each other, and fixing portions which are provided adjoining to the vibrating plate, and has a predetermined length A of edge at a side adjoining to the vibrating plate. The back electrode is held by the fixing portions in a state that space is provided between the back electrode and the vibrating plate. Outer edges of the back electrode which are not held by the adjoining fixing portions, are straight lines and the straight lines define an octagonal shape as a whole.

## Description

### TECHNICAL FIELD

The present invention relates to a capacity detection type sensor element, and more particularly, to a capacity detection type sensor element which is capable of reducing influence of film stress caused by a film which constitutes back electrode of the sensor.

### BACKGROUND ART

As one example of a capacity detection type sensor element in the prior art technology, a pressure sensor is disclosed in Japanese Unexamined Patent Publication 2002-027595.

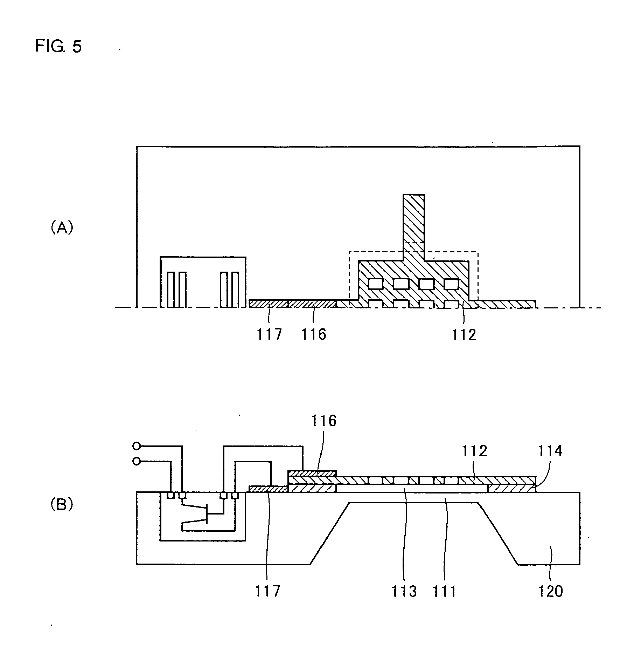

Fig. 5 are a plan view (A) and a sectional view (B) of the conventional capacity detection type sensor element which is disclosed in the Patent Publication 2002-027595.

Referring to Fig. 5, the capacity detection type sensor element in the prior art technology comprises a substrate 120, a vibrating plate 111 which is provided in the central part of the substrate 120 and having a small thickness, a back plate (hereinafter also referred to as a back electrode) 112 which is provided to be opposed to the vibrating plate 111 via a space 113, a supporting portion 114 which supports the back plate 112 on the substrate 120, a back electrode terminal 116 provided on the back plate 112 and a vibrating plate electrode terminal 117 provided on the substrate 120.

The pressure sensor in the prior art technology has been made as described above. As shown in Fig. 5, the back plate 112 which constitutes the pressure sensor, has a rectangular shape as the vibrating plate 111 and the back plate is held by the narrower supporting portion 114 at the central part of its four edges. Due to this arrangement, there is a problem that strength of the back plate 112 becomes weak because vertex parts of the rectangular back plate are far from the supporting portions 114 and width of the supporting portion 114 becomes narrow.

### DISCLOSURE OF THE INVENTION

The present invention is made to solve the above described problem and it is an object of the present invention to provide a capacity detection type sensor element in which mechanical strength of the back electrode can be secured.

A capacity detection type sensor element in accordance with the present invention includes a vibrating plate and a flat back electrode which are provided opposedly with each other, that the sensor element further comprises a plurality of fixing portions which are provided adjoining to the vibrating plate, and have a predetermined length of edge at a side adjoining to the vibrating plate, the back electrode is held by the fixing portions in a state that space is provided between the back electrode and the vibrating plate, and the shape of the outer edges of the back electrode which are not held by the fixing portions between the adjoining fixing portions, is a predetermined shape located on substantially straight lines that connect the adjoining fixing portions with the shortest length or on outside of the straight lines.

Preferably, the predetermined shape is a circular arc which includes the shortest length between the adjoining fixing portions.

Also ratio of length of the fixing portion and distance of the opposing fixing portions is larger than 2/15. More preferably, the ratio of length of the fixing portion and the distance of the opposing fixing portions is equal to or larger than 4/15.

Preferably, a plurality of holes whose diameters are smaller than 20 µm, are provided on the back electrode. More preferably, a plurality of holes whose diameter is equal to or smaller than 14 µm, are provided on the back electrode.

The shape of the fixing portion may be a rectangle or a triangle.

Because the back electrode is held by a plurality of the fixing portions, and the shape of outer edge of the back electrode which are not held by the fixing portions between the adjoining fixing portions, is a predetermined shape located on substantially straight lines that connect the adjoining fixing portions with the shortest length or on outside of the straight lines, mechanical strength of the back electrode can be secured.

Preferably, the shape of outer edges between the adjoining fixing portions is substantially straight line that connects the adjoining fixing portions with the shortest length or a circular arc which has the shortest length between the adjoining fixing portions as a chord. Because the back electrode is held by a structure having a dimension that is the shortest length or near to the shortest length, strength of the back electrode can be more improved.

### BRIEF DESCRIPTION OF DRAWINGS

Fig. 1 are diagrams to show structure of a microphone which is one example of the capacity detection type sensor element according to one embodiment of the present invention;
Fig. 2 is a plan view to show a relevant part of the microphone according to another embodiment of the present invention;
Fig. 3 are plan views to show examples of variation in the fixing portion;
Fig. 4 are a diagram to show dimension of part of the fixing portion to support the back electrode and distance of opposing fixing portions at the back electrode, and tables to show relation between ratio of the dimension and the distance and yield of the vibrating plate in relation to the ratio, and relation between dimension of acoustic hole formed on the back electrode and yield of the vibrating plate;
Fig. 5 are views to show structure of the pressure sensor in the prior art technology as one example of capacity change detecting sensor element.

### BEST MODE FOR CARRYING OUT THE INVENTION

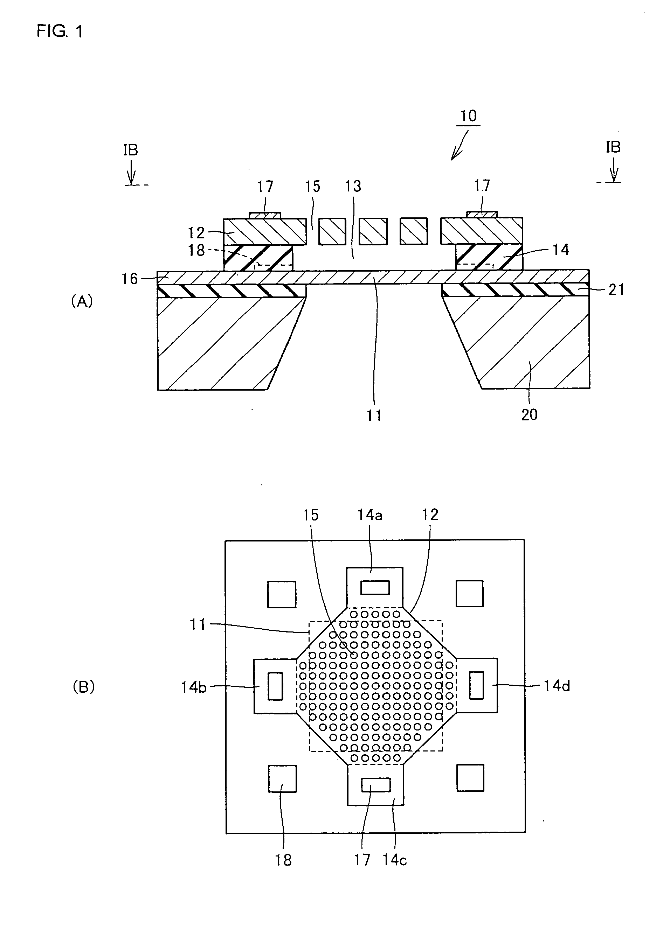

Hereinafter, embodiments of the present invention will be described with reference to the accompanying drawings. Fig. 1 (A) and Fig. 1 (B) are diagrams to show structure of a microphone which is one example of the capacity detection type sensor element according to one embodiment of the present invention, and Fig. 1 (A) is a cross sectional view and Fig. 1 (B) is a plan view of a section shown by a line IB-IB in Fig. 1 (A).

At first, referring to Fig. 1 (A), the microphone 10 includes a substrate 20, an oxide film 21 which is formed on the substrate 20, a vibrating plate 11 (containing an extended portion 16 extending outwardly from the vibrating plate) which is formed on the oxide film 21, a fixing portion 14 which is provided on the vibrating plate 11 and formed of insulating material and a back electrode 12 which is provided on the fixing portion 14. By the fixing portion 14, a space 13 is formed between the vibrating plate 11 and the back electrode 12. A plurality of through holes are provided on the back electrode 12 as acoustic holes 15. Also on a surface of the back electrode 12, output electrodes 17 for the back electrode are provided, and on a surface of the extended portion 16 output electrodes 18 for the vibrating plate are provided.

Next, referring to Fig. 1 (B), the vibrating plate 11 is provided in substantially a central part of the substrate 20 and has a rectangular shape. Hereinafter, to make the explanation simplified, the vibrating plate is supposed and described to be a square. Four fixing portions 14a - 14d having a rectangular shape are provided substantially a central part of four edges which define the vibrating plate 11 adjoining to the edges and the back electrode 12 is provided on the fixing portion 14. The back electrode 12 has a shape of an octagon that is made by four corners of a rectangle are changed to rectangles having substantially the same shape as the fixing portion 14, and four lines which are defined by inner side of fixing portion 14 in the vibrating plate side, and four edges (straight edges) which respectively connect each two of the adjoining fixing portion 14 (for example, 14a and 14b) in the shortest distance.

Because the back electrode 12 is held by the fixing portions 14 which are provided at an outer periphery of the four edges of the vibrating plate 11 with a square shape, and also has a shape which is made of the four edges connecting the adjoining fixing portions 14 with shortest distance, mechanical strength of the back electrode 12 can be secured.

At this point, though a space is shown in Fig. 1 (B) between the vibrating plate 11 and the fixing plate 14, the space is made with exaggeration for easier understanding, and in actual, there is almost no space between them.

At the same time, though the output electrode 17 for the back electrode is made on each of all fixing portions 14 and the output electrode 18 for the vibrating plate is made on each of all four corners on a surface of the extended portion 16 of the vibrating plate 11, these are made because of consideration for yield, and essentially it is enough that only one of respective output electrodes 17 and 18 are made.

The vibrating plate 11 is made to vibrate by pressure change (including voice and the like) from outside. In other words, the microphone 10 is made to function as a capacitor with electrostatic capacity between the vibrating plate 11 and the back electrode 12, and the microphone is used in a form that the change of the electrostatic capacity of the capacitor is electrically output while the vibrating plate 11 is moved by an acoustic pressure signal.

As one example of dimension of the microphone 10, the substrate 20 is formed in a size that each one of the edges of a square is roughly 5.5 mm and its thickness is roughly 600 µm. Moreover, the vibrating plate 11 is set in a size that each one of the edges of the square is roughly 1.5 mm and its thickness is roughly 2 µm. On the back electrode 12, a plurality of acoustic holes in a shape of rectangle, circle or polygon with a size of 10 µm level, are formed. At this point, these dimensions are mere an example and they should not be considered as restrictive examples. Further, in Fig. 1 the dimensions of portions such as thickness and diameter are exaggerated to show.

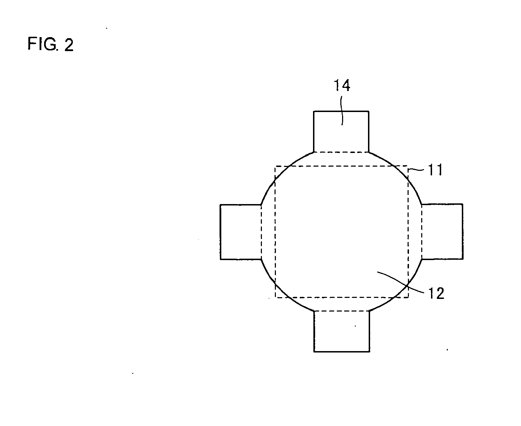

Hereinafter, another embodiment of the present invention will be explained. In the embodiment described above, an example is explained in which dimension of unsupported portion of the back electrode 12 makes minimized. However, in the present invention, it is enough that strength of the back electrode can be secured. Such embodiment is shown in Fig. 2. Fig. 2 is a diagram to show another embodiment. Referring to Fig. 2, the back electrode 12 is made in substantially a circular shape. Even in this embodiment, the back electrode 12 is supported by the fixing portions 14 with a predetermined width, and length of the unsupported portion of the electrode is made shorter in the shape of circular arc. By this arrangement, the sensor element is made to have predetermined strength as in the above described embodiment.

At this point, though only a plan view is shown in this embodiment, the sensor element has substantially the same cross sectional view as shown in Fig. 1(A).

In addition, though the back electrode 12 of this embodiment is made as a circular shape, it should not be considered as a restricted example and the sensor element may be also made in an elliptical shape, for example.

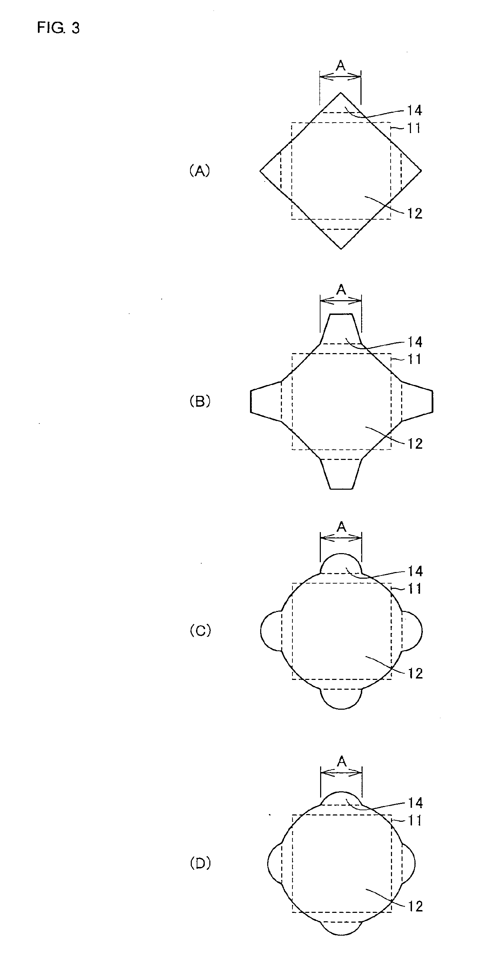

Hereinafter, the shape of the fixing portion 14 will be explained. In the above described two embodiments, examples having a rectangular shape as shape of the fixing portion 14 are explained. However, the shape of the fixing portion is not limited in a rectangle. Fig. 3 (A) to Fig. 3 (D) are diagrams to show other embodiments with the fixing portion 14 in various different shapes.

With reference to Fig. 3, the shape of the fixing portion 14 may be a triangle (A), a trapezoid (B), a semi circle (C) or a circular arc (D) as far as the fixing portion has a predetermined length A shown in Fig. 3 to hold the back electrode 12.

By these arrangement to make the fixing portion 14 in these shapes, it is attained that the fixing portion 14 can be made compact in size, and further, it is attained that the whole microphone 10 can be made compact in size.

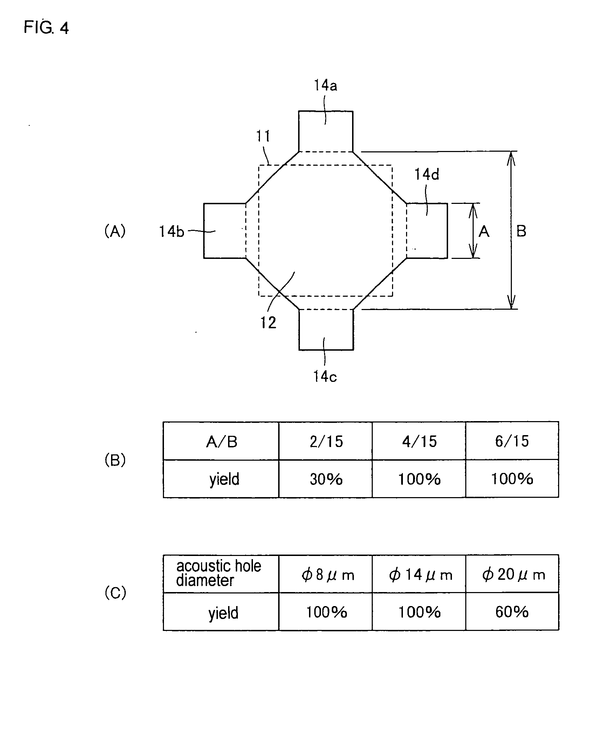

Hereinafter, relation between dimension of part of the fixing portion to support the back electrode 12 and distance of the opposing fixing portions 14 (for example, 14a and 14c) at the back electrode 12, will be explained. Fig. 4 (A) is a diagram to show dimension A of part of the fixing portion 14 to support the back electrode 12 and distance B of opposing fixing portions at the back electrode 12, Fig. 4 (B) is a table to show relation between ratio of the dimension and the distance and yield of the vibrating plate in relation to the ratio, and Fig. 4 (C) is a table to show relation between dimension of the acoustic hole provided in the back electrode and yield of the vibrating plate.

Referring to Fig. 4 (A) and Fig. 4 (B), the yield is 30% when the ratio A/B is 2/15, but the yield becomes 100% when the ratio becomes over the value and is 4/15 and the like.

As a result, when considering yield of the back electrode 12, it is preferable that the ratio A/B which is the ratio between the length of edge of the fixing portion 14 and the distance of the opposing fixing portions 14 is over 2/15. Moreover, it is more preferable that the ratio is equal to or larger than 4/15. At this point, these results are obtained when the acoustic holes 15 with the diameter of 8 µm are provided in the back electrode 12.

Also, referring to Fig. 4 (C), it can be understood that the yield is 60% when the diameter of the acoustic hole 15 is 20 µm, but the yield becomes 100% when the diameter becomes less than the value and is 14 µm, for example.

As a result, when considering yield of the back electrode 12, it is preferable that the diameter of the acoustic hole 15 is less than 20 µm. Further, it is more preferable that the diameter of the acoustic hole 15 is equal to or less than 14 µm.

At this point, these results are obtained when the above described ratio of A/B is 6/15.

In this embodiment, the dimension A of length of part of the fixing portion 14 to support the back electrode 12 and the distance B of opposing fixing portions 14 at the back electrode 12 are utilized as the ratio, however, it should not be considered as a restricted example and the dimension of one edge of the vibrating plate 11 may be utilized as substitute for the distance B of opposing fixing portions 14. This is because, as described above, the distance of the opposing fixing portions of the back electrode 12 is substantially equal to the dimension of one edge of the vibrating plate 11.

At this point, in the above described embodiments, though the explanation is made on the examples in which the acoustic holes are provided on the back electrode, however, the present invention is not restricted in these examples, and there may be no acoustic holes on the back electrode. In such a case, strength of the back electrode can be more improved.

Though the explanation is made on examples in which the acoustic holes in a circular shape are provided in the above embodiments, the present invention is not restricted in these examples, and the acoustic holes in a shape of rectangle or polygon may be provided.

Further, in the above described embodiments though the explanation is made on the microphone as an example of the capacity detection type sensor element, the present invention is not restricted in the microphone, and can be applied to any types of the capacity detection type sensor element such as a pressure sensor.

In addition, though explanation is made on examples in which the vibrating plate is made in the rectangular shape, or especially in the square shape, the present invention is not restricted in these examples, and the vibrating plate may be also in a polygonal, circular or elliptic shape.

Up to here, though the embodiments of the present invention have been explained with reference to the drawings, the present invention is not restricted to the above illustrated embodiments. Various kinds of modifications and variations may be added to the illustrated embodiments within the same or equivalent scope of the present invention.

### INDUSTRIAL APPLICABILITY

In the capacity detection type sensor element in accordance with the present invention, the mechanical strength of the back electrode can be secured by the arrangement that the shape of outer edge of the back electrode which is not supported by the fixing portion, is made to be constituted by the straight lines that connect the fixing portions adjoining to the outer edge with the shortest distance, resultantly, this invention can be utilized in the capacity detection type sensor element such as a capacity type sensor, a microphone and the like.

## Claims

1. A capacity detection type sensor element comprising:
a vibrating plate and a flat back electrode which are provided opposedly with each other; and
a plurality of fixing portions which are provided adjoining to said vibrating plate, and has a predetermined length A of edge at a side adjoining to said vibrating plate, wherein
said back electrode is held by said fixing portions in a state that space is provided between said back electrode and said vibrating plate, and
the shape of outer edges of said back electrode which are not held by said fixing portions between said adjoining fixing portions, is a predetermined shape located on substantially straight lines that connect said adjoining fixing portions with the shortest length or on outside of said straight lines.

2. The capacity detection type sensor element according to claim 1, wherein said predetermined shape is a circular arc which has said shortest length between said adjoining fixing portions as a chord.

3. The capacity detection type sensor element according to claim 1, wherein ratio of the predetermined length A of said fixing portion and distance B of said opposing fixing portions is larger than 2/15.

4. The capacity detection type sensor element according to claim 3, wherein said ratio of the predetermined length A of said fixing portion and the distance B of said opposing fixing portions is equal to or larger than 4/15.

5. The capacity detection type sensor element according to claim 1, wherein a plurality of holes whose diameters are smaller than 20 µm, are provided on said back electrode.

6. The capacity detection type sensor element according to claim 1, wherein a plurality of holes whose diameters are smaller than 14 µm, are provided on said back electrode.

7. The capacity detection type sensor element according to claim 1, wherein the shape of said fixing portion a rectangle.

8. The capacity detection type sensor element according to claim 1, wherein the shape of said fixing portion is a triangle.

## Amended claims

### Amended claims under Art. 19.1 PCT

1. A capacity detection type sensor element comprising:
a vibrating plate which is provided on a substrate;
a flat back electrode which is provided opposedly to said vibrating plate; and
a plurality of fixing portions which are provided adjoining to said vibrating plate without contacting to said vibrating plate, and have a predetermined length of edge at a side adjoining to said vibrating plate, wherein
said back electrode is held by said fixing portions in a state that space is provided between said back electrode and said vibrating plate, and
the shape of the outer edges of said back electrode which are not held by said adjoining fixing portions, is a predetermined shape located on substantially straight lines that connect said adjoining fixing portions with the shortest length or located on outside of said straight lines.

2. The capacity detection type sensor element according to claim 1, wherein said predetermined shape is a circular arc which has said shortest length between said adjoining fixing portions as a chord.

3. The capacity detection type sensor element according to claim 1, wherein ratio of the predetermined length A of said fixing portion and distance B of said opposing fixing portions is larger than 2/15.

4. The capacity detection type sensor element according to claim 3, wherein said ratio of the predetermined length A of said fixing portion and the distance B of said opposing fixing portions is equal to or larger than 4/15.

5. The capacity detection type sensor element according to claim 1, wherein a plurality of holes whose diameter is smaller than 20 µm, are provided on said back electrode.

6. The capacity detection type sensor element according to claim 1, wherein a plurality of holes whose diameter is smaller than 14 µm, are provided on said back electrode.

7. The capacity detection type sensor element according to claim 1, wherein the shape of said fixing portion a rectangle.

8. The capacity detection type sensor element according to claim 1, wherein the shape of said fixing portion is a triangle.
